# EUROPEAN PATENT SPECIFICATION

(11) **EP 0 683 579 B1**
(45) Date of publication and mention of the grant of the patent: **26.03.2003**
(21) Application number: 95303477.4
(22) Date of filing: 22.05.1995
(51) Int. Cl.: H04J 3/12, H04J 3/16

(54) **Method for transmitting control information over an HDSL transmission link**
Verfahren zur Übertragung von Kontrollinformationen über eine HDSL-Übertragungsleitung
Méthode de transmission d'information de contrôle par liaison HDSL

(30) Priority: 20.05.1994 FI 942373
(43) Date of publication of application: 22.11.1995
(73) Proprietor: Nokia Corporation, 02150 Espoo (FI)
(72) Inventor: Nyman, Kai, FIN-02660 Espoo (FI); Patana, Jari, FIN-01620 Vantaa (FI)
(74) Representative: Peltonen, Antti Sakari

(56) References cited:
- EP-A- 0 565 890
- WO-A-94/17614

## Description

The invention relates to a method according to the preamble of the accompanying claim 1 for transmitting control information from an SDH network over an HDSL transmission link.

The HDSL (High bit rate Digital Subscriber Line) transmission technique relates to transmitting a 2 Mbit/s digital signal in a metallic twin cable. The HDSL transmission technique is defined in the ETSI (European Telecommunications and Standards Institute) recommendation DTR/TM-3017. An individual HDSL transceiver system comprises transceivers, employing echo cancellation technique, connected to each other via a bidirectional transmission link formed by a (copper) twin cable. The HDSL transmission system may comprise two or three such separate transceiver systems adjacent to each other, the transmission rate used over each parallel link being thus a sub-rate of 2 Mbit/s; in the case of three parallel pairs the rate is 784 kbit/s, and in the case of two parallel pairs 1168 kbit/s. The aforementioned recommendation defines how 2 Mbit/s signals, such as the VC-12 signals of the SDH network or the 2048 kbit/s signals according to the CCITT recommendations G.703/G.704, are transmitted in the HDSL system. Such a system is disclosed in EP 0 565 890. The HDSL system is not described closer here, since the present invention does not require any changes to be made in the HDSL system, but the system operates in a manner known per se. The aforementioned specification is referred to for a more detailed description of the HDSL system.

The present invention does not require any changes to be made in the SDH (Synchronous Digital Hierarchy) system either, but all the SDH-specific functions needed in the invention are known per se. Therefore the SDH system will not be described closer either. The SDH system is described in greater detail for example in references [1] and [2] (the references are listed at the end of the specification).

According to the ETSI recommendations, it is thus possible, through HDSL links, to transmit a VC-12 signal of the SDH network further from the SDH trunk network. In a way this means that the operations of the SDH network are brought closer to the customer (i.e. subscriber). However, the ETSI recommendations define no transparent control channel by means of which it would be possible to control, from the SDH network, the part of the telecommunications network situated beyond the HDSL link. The HDSL frame does comprise free bits which could possibly be used in such control, but this kind of arrangement would be in practice quite complex and would not provide a transparent channel. ("Transparent" means that the data passes as such through the HDSL link without requiring any extra processing.)

Neither is it preferable to transmit the control channel in the bytes of the VC-12 frame, since the VC-12 signals to be transmitted to the HDSL link may arrive from far away, even from another SDH network. (The VC-12 signal arrives thus intact over the entire connection.) The generation point of the VC-12 signal is not necessarily situated in the SDH network to which the particular HDSL modem is linked, but it may be located in another SDH network from where it has been transmitted to the network to which the HDSL link is connected. The generation point may be situated, for example, in an SDH network located within another country, and thus the VC-12 signal to be transmitted is not necessarily synchronized with the network to which the HDSL link is connected. This is due to the slight difference in rate between the SDH networks, which in turn results from the networks using different timing sources.

The purpose of the present invention is to eliminate the above-described problems and to provide a transparent control channel by means of which the part of the telecommunications network situated beyond the HDSL link can be controlled from the side of the SDH network. This aim is achieved with the method according to the invention, which is characterized in that a control channel is formed of the pointer bytes V4 of the TU-12 frames to be transmitted over the HDSL link.

The idea of the invention is thus to transmit a TU-12 signal over the HDSL link and to form a control channel in the free pointer byte V4 of the TU-12 frame. In this manner, it is possible to provide a (synchronous) control channel operating at the rate of 16 kbit/s.

In the following, the invention and its preferred embodiments will be described in greater detail with reference to Figures 1 to 3 in the examples according to the accompanying drawings, in which
Figure 1 shows in principle how an HDSL link is connected to an SDH network in order to form a control channel,
Figure 2 shows a first preferred manner of mapping a TU-12 frame into a core frame of an HDSL link, and
Figure 3 shows a second preferred manner of mapping a TU-12 frame into a core frame of an HDSL link.

A subrack 31 of a node equipment situated on the edge of the SDH network typically comprises a bus 32, where TU-level signals are transmitted. Furthermore, the subrack comprises an HDSL device 35 on the side of the network, the device connecting the HDSL link to the SDH network. Between the bus and the HDSL device 35 there is according to the invention a processing unit 41, where new state data is calculated for the pointers of the TU-12 signals transmitted to the SDH network. In the opposite direction of transmission (i.e. from the SDH network to the subscriber), no processing is performed in the processing unit, but the TU-12 signals are transmitted as such to the HDSL link by mapping the bytes of the TU-12 frame in the HDSL device 35 into the core frame according to the HDSL system, the core frame being transmitted further within the HDSL frame via twin cables 36 to a device 37 on the side of the subscriber. An HDSL device 38 of the subscriber side comprises a termination unit 42, where the termination of both TU-12 and VC-12 frames takes place (the interpretation and generation of the TU pointers, and the disassembly and assembly of the VC-12 frames).

In the transmission from the subscriber to the SDH network, new values have to be calculated for the TU pointers in the processing unit 41 of the SDH subrack, since the TU-12 frames must be transmitted on the bus in a particular phase (required by the bus), and the TU-12 frames from the subscriber cannot be aligned with the frame alignment required by the bus, for the reason alone that the length (delay) of the subscriber lines varies.

The other components (cross-connect devices or the like), which are connected to the bus 32 of the subrack and through which the VC-12 signal is transmitted further to the SDH network, are not described in greater detail, since they are not included within the scope of the present invention. The more detailed structure of these other components may also be modified within the prior art.

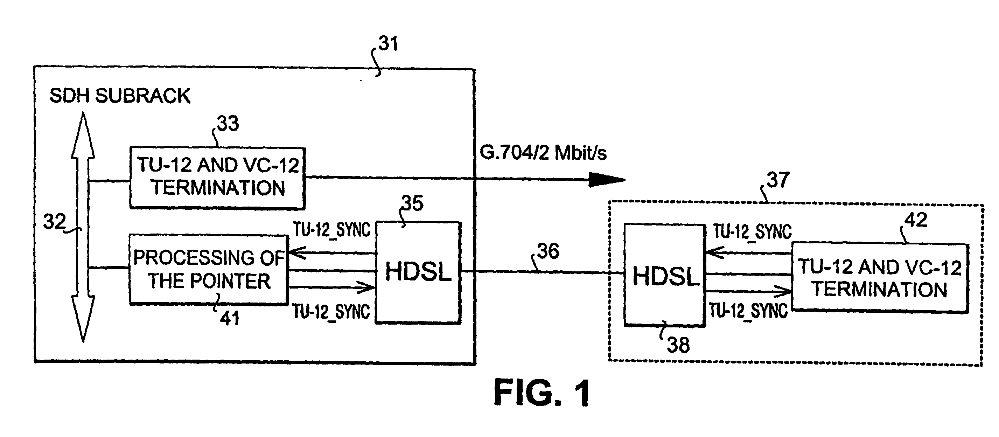

In order to distribute from the subrack also a normal 2,048 Mbit/s signal according to the G.703/704 specifications, the subrack also typically comprises a termination unit where the termination of both TU-12 and VC-12 signals is performed (the interpretation and generation of the TU pointers, and the disassembly and assembly of the VC-12 signals). This termination unit is denoted by reference numeral 33. The frame synchronization signals (indicating the location of the V1 byte of the TU-12 frame) are denoted in Figure 1 by reference symbol TU-12_SYNC.

According to the invention, the pointer bytes V4 of the successive TU-12 frames are used to form a control channel through which network management information and/or network control information is transmitted over an HDSL link.

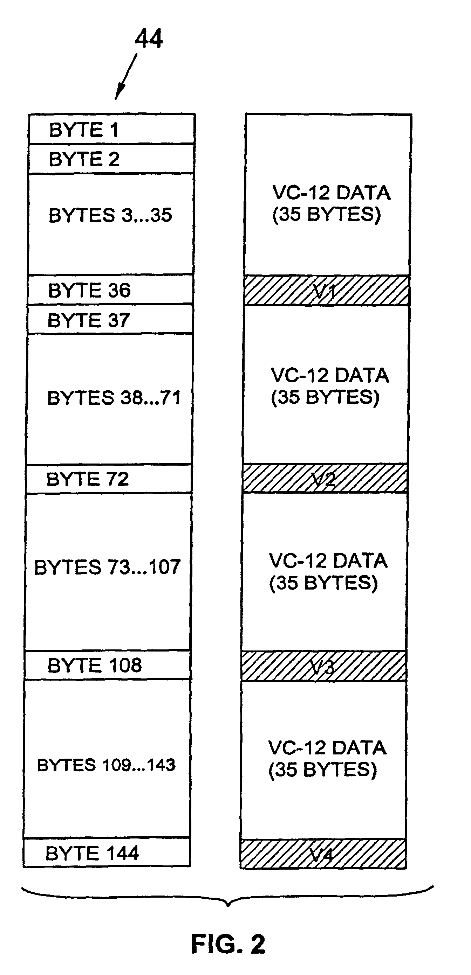

The TU-12 frame may be mapped into the core frame of the HDSL link for example in the manner shown in the accompanying Figure 2. The left side of the figure shows one HDSL core frame 44 having the length of 500 µs and 144 bytes. The first pointer byte, i.e. the V1 byte, is mapped into byte 36 of the core frame, after which the other pointer bytes (V2...V4) are located at even intervals in the frame in such a way that the V4 byte forming the control channel is the last byte of the frame (byte 144).

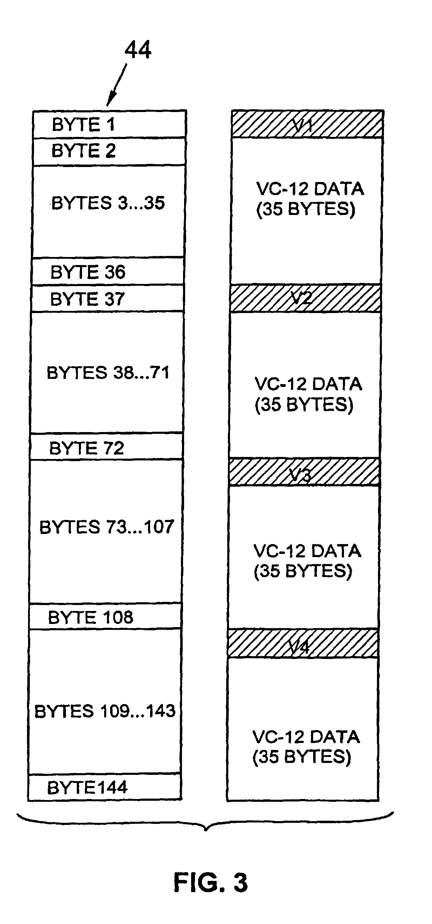

Figure 3 shows another mapping alternative. In this case, the first pointer byte V1 is mapped into the first byte of the core frame, after which the other V bytes (V2...V4) are again located at even intervals in the frame, i.e. in positions 37, 73 and 109. The V4 byte forming the control channel is thus in this case byte 109 of the frame.

It is possible in principle that the method according to the invention is altered in such a way that a VC-12 signal is transmitted over the HDSL link in manner known per se (i.e. in the manner defined in the aforementioned ETSI specification). If a control channel is thus formed in the last byte (byte 144) of the core frame, the advantage is that it is possible to terminate the control channel from the same position of the core frame using the same equipment, regardless of whether a TU-12 signal (the manner according to the invention) or a VC-12 signal (the manner described by ETSI) is transmitted over the HDSL link. However, using a VC-12 signal produces the aforementioned synchronization problems when a signal originating in another SDH network is received.

The advantage of the other mapping alternative is in turn that the first byte of the frame is the V1 byte which must be interpreted first, and it is thus easy to terminate the data in the HDSL system. On the basis of the V1 byte found, the location of the V2 byte is known, and on the basis of these two bytes the pointer state is interpreted in a manner known per se.

Even though the invention is described above with reference to the examples according to the accompanying drawings, it is clear that the invention is not restricted thereto, but it can be modified within the scope of the appended claims. Thus, for example the more detailed structure of the equipment may be modified in many ways without deviating from the principle according to the invention.

### List of references:

[1]. CCITT Blue Book, Recommendation G.709: "Synchronous Multiplexing Structure", May 1990.
[2]. SDH - Ny digital hierarki, TELE 2/90.

## Claims

1. A method for transmitting control information over an HDSL transmission link (36), which is connected to an SDH network, according to which method
- data from the SDH network to the HDSL link is mapped into the frame structure according to the HDSL system, and
- pointers required by the SDH network are generated into the data frames passing from the HDSL link to the SDH network, the pointers indicating the phase of the payload within the frame structure, **characterised in that** a control channel extending from the SDH network over the HDSL link is formed of the pointer bytes V4 of the TU-12 frames to be transmitted over the HDSL link.

2. A method according to claim 1, **characterised in that** the TU-12 signal is mapped into the core frame of the HDSL system by transmitting the V4 byte of the TU-12 frame in the last byte of the core frame.

3. A method according to claim 1, **characterised in that** the TU-12 signal is mapped into the core frame of the HDSL system by transmitting the V4 byte of the TU-12 frame in byte 109 of the core frame.

## Patentansprüche

1. Verfahren zur Übertragung von Steuerinformationen über eine HDSL-Übertragungsleitung (36), die mit einem SDH-Netzwerk verbunden ist, wobei bei dem Verfahren
Daten von dem SDH-Netzwerk zu der HDSL-Leitung auf die Rahmenstruktur gemäß dem HDSL-System abgebildet werden, und
von dem SDH-Netzwerk geforderte Zeiger in den Datenrahmen erzeugt werden, die von der HDSL-Leitung zu dem SDH-Netzwerk laufen, wobei die Zeiger die Phase der Nutzlast innerhalb der Rahmenstruktur anzeigen, **dadurch gekennzeichnet, dass** ein sich von dem SDH-Netzwerk über die HDSL-Leitung erstreckender Steuerkanal aus den Zeigerbytes V4 der über die HDSL-Leitung zu übertragenden TU-12-Rahmen gebildet wird.

2. Verfahren nach Anspruch 1, **dadurch gekennzeichnet, dass** das TU-12-Signal in den Kernrahmen des HDSL-Systems abgebildet wird, indem das V4-Byte des TU-12-Rahmens in dem letzten Byte des Kernrahmens übertragen wird.

3. Verfahren nach Anspruch 1, **dadurch gekennzeichnet, dass** das TU-12-Signal in den Kernrahmen des HDSL-Systems abgebildet wird, indem das V4-Byte des TU-12-Rahmens in Byte 109 des Kernrahmens übertragen wird.

## Revendications

1. Procédé pour transmettre des informations de commande sur une liaison de transmission HDSL (36), qui est connectée à un réseau SDH, selon lequel procédé :
- les données du réseau SDH vers la liaison HDSL sont mappées dans la structure de trame conformément au système HDSL, et
- des pointeurs nécessaires au réseau SDH sont générés dans les trames de données qui passent de la liaison HDSL au réseau SDH, les pointeurs indiquant la phase de la charge utile dans la structure de trame, **caractérisé en ce qu'**un canal de commande s'étendant du réseau SDH sur la liaison HDSL est constitué des octets de pointeur V4 des trames TU-12 à transmettre sur la liaison HDSL.

2. Procédé selon la revendication 1,
**caractérisé en ce que** le signal TU-12 est mappé dans la trame de noyau du système HDSL en transmettant l'octet V4 de la trame TU-12 dans le dernier octet de la trame de noyau.

3. Procédé selon la revendication 1,
**caractérisé en ce que** le signal TU-12 est mappé dans la trame de noyau du système HDSL en transmettant l'octet V4 de la trame TU-12 dans l'octet 109 de la trame de noyau.
